# EUROPEAN PATENT APPLICATION

(11) **EP 4 571 601 A1**
(43) Date of publication of application: **18.06.2025**
(21) Application number: 23879479.6
(22) Date of filing: 30.08.2023
(51) Int. Cl.: G06N 20/00, G06F 21/62

(54) **INFORMATION PROCESSING DEVICE, INFORMATION PROCESSING METHOD, AND PROGRAM**

(30) Priority: 20.10.2022 JP 2022168484
(71) Applicant: Sony Group Corporation, Tokyo 108-0075 (JP)
(72) Inventor: JIMBO, Masanobu, Tokyo 108-0075 (JP); YANG, Bin, Tokyo 108-0075 (JP); MARUYAMA, Shinya, Tokyo 108-0075 (JP); GOMI, Hideho, Tokyo 108-0075 (JP)
(74) Representative: MFG Patentanwälte Meyer-Wildhagen Meggle-Freund Gerhard PartG mbB
(86) International application number: PCT/JP2023/031384
(87) International publication number: WO 2024/084827

(57) **Abstract**

A new and improved technology capable of further improving inference accuracy while securing security of a machine learning model by federated learning is proposed.

Provided is an information processing apparatus including: a learning unit that learns an inference model by federated learning; and an acquisition unit that acquires, from a plurality of terminals, privacy-protected data obtained by executing privacy protection processing on local data obtained by each of the plurality of terminals, in which the learning unit is configured to: perform learning of the inference model on the basis of the privacy-protected data; and distribute information regarding the inference model including a hyperparameter of the inference model on the basis of a result of the learning to the plurality of terminals, the acquisition unit is configured to acquire, from the plurality of terminals, update information of the inference model obtained by performing the learning of the inference model using the local data as learning data, and the learning unit is configured to update the inference model using the update information.

## Description

### TECHNICAL FIELD

The present disclosure relates to an information processing apparatus, an information processing method, and a program.

### BACKGROUND ART

In recent years, machine learning models (inference models) that perform some inference on the basis of collected data have been developed. In addition, in the development of the inference models as described above, technology for developing a model while securing security such as protection of privacy information included in collected data has also been proposed. For example, Patent Document 1 discloses a technique using a federated learning method in training of a machine learning model for processing medical data.

### CITATION LIST

### PATENT DOCUMENT

Patent Document 1: Japanese Patent Application Laid-Open No. 2021-117964

### SUMMARY OF THE INVENTION

### PROBLEMS TO BE SOLVED BY THE INVENTION

However, in a machine learning model using a federated learning method as in the technology disclosed in Patent Document 1, there is a possibility that inference accuracy of the model is sacrificed in order to ensure security.

### SOLUTIONS TO PROBLEMS

In order to solve the above problem, according to a certain aspect of the present disclosure, there is provided an information processing apparatus including: a learning unit that learns an inference model by federated learning; and an acquisition unit that acquires, from a plurality of terminals, privacy-protected data that is data obtained by executing privacy protection processing on local data obtained by each of the plurality of terminals, in which the learning unit is configured to: perform learning of the inference model on the basis of the privacy-protected data; and distribute information regarding the inference model including a hyperparameter of the inference model set on the basis of a result of the learning to the plurality of terminals, the acquisition unit is configured to acquire, from the plurality of terminals, update information of the inference model obtained by performing the learning of the inference model using the hyperparameter distributed by each of the plurality of terminals using the local data as learning data, and the learning unit is configured to update the inference model using the update information.

Furthermore, according to the present disclosure, there is provided an information processing method executed by a computer, the computer including a processor configured to: learn an inference model by federated learning; acquire, from a plurality of terminals, privacy-protected data that is data obtained by executing privacy protection processing on local data obtained by each of the plurality of terminals; perform learning of the inference model on the basis of the privacy-protected data; distribute information regarding the inference model including a hyperparameter of the inference model set on the basis of a result of the learning to the plurality of terminals; acquire, from the plurality of terminals, update information of the inference model obtained by performing the learning of the inference model using the hyperparameter distributed by each of the plurality of terminals using the local data as learning data; and update the inference model using the update information.

Furthermore, according to the present disclosure, there is provided a program for causing a computer to function as an information processing apparatus including: a learning unit that learns an inference model by federated learning; and an acquisition unit that acquires, from a plurality of terminals, privacy-protected data that is data obtained by executing privacy protection processing on local data obtained by each of the plurality of terminals, in which the learning unit is configured to: perform learning of the inference model on the basis of the privacy-protected data; and distribute information regarding the inference model including a hyperparameter of the inference model set on the basis of a result of the learning to the plurality of terminals, the acquisition unit is configured to acquire, from the plurality of terminals, update information of the inference model obtained by performing the learning of the inference model using the hyperparameter distributed by each of the plurality of terminals using the local data as learning data, and the learning unit is configured to update the inference model using the update information.

### BRIEF DESCRIPTION OF DRAWINGS

Fig. 1 is an explanatory diagram illustrating a configuration example of an information processing system according to an embodiment of the present disclosure.
Fig. 2 is a block diagram illustrating a configuration example of a terminal 10 according to the present embodiment.
Fig. 3 is a block diagram illustrating a configuration example of an information processing apparatus 20 according to the present embodiment.
Fig. 4 is a sequence diagram for explaining a first operation example of the information processing system according to the present embodiment.
Fig. 5 is a sequence diagram illustrating a flow of processing of a subroutine of S101 in the sequence diagram illustrated in Fig. 4.
Fig. 6 is a diagram for explaining an example of generation processing of privacy-protected data by a data processing unit 130.
Fig. 7 is a sequence diagram illustrating a flow of processing of a subroutine of S107 in the sequence diagram illustrated in Fig. 4.
Fig. 8 is a sequence diagram illustrating a flow of processing of a subroutine of S109 in the sequence diagram illustrated in Fig. 4.
Fig. 9 is a sequence diagram for explaining a second operation example of the information processing system according to the present embodiment.
Fig. 10 is a sequence diagram for explaining a flow of processing of subroutines in S131 and S105 in the sequence diagram illustrated in Fig. 9.
Fig. 11 is a diagram for explaining another example of generation processing of privacy-protected data by the data processing unit 130.
Fig. 12 is a sequence diagram for explaining a third operation example of the information processing system according to the present embodiment.
Fig. 13 is a sequence diagram for explaining a flow of processing of subroutines in S141 and S103 in the sequence diagram illustrated in Fig. 12.
Fig. 14 is a diagram for explaining aggregation of privacy-protected data in the third operation example of the information processing system according to the present embodiment.
Fig. 15 is a conceptual diagram for explaining detection of an abnormal value in the third operation example of the present embodiment.
Fig. 16 is another conceptual diagram for explaining detection of an abnormal value in the third operation example of the present embodiment.
Fig. 17 is a diagram for explaining generation of privacy-protected data in a modification of the present embodiment.
Fig. 18 is a sequence diagram for explaining an operation example in a modification of the information processing system according to the present embodiment.
Fig. 19 is a sequence diagram illustrating a flow of processing of subroutines in S151 and S155 in the sequence diagram illustrated in Fig. 18.
Fig. 20 is a block diagram illustrating a hardware configuration 90 according to an embodiment of the present disclosure.

### MODE FOR CARRYING OUT THE INVENTION

Hereinafter, preferred embodiments of the present disclosure will be described in detail with reference to the accompanying drawings. Note that, in the present specification and the drawings, components having substantially the same functional configurations are denoted by the same reference signs, and redundant description is omitted.

In addition, in the present specification and the drawings, a plurality of components having substantially the same functional configurations may be distinguished by attaching different numbers or alphabets after the same reference signs. However, in a case where it is not necessary to particularly distinguish each of the plurality of components having substantially the same functional configurations, only the same reference sign is attached to each of the plurality of components.

Note that the description will be given in the following order.
1. Overview
2. System Configuration Example
3. Functional Configuration Example
   3-1. Terminal 10
   3-2. Information Processing Apparatus 20
4. Operation Example
   4-1. First Operation Example
   4-2. Second Operation Example
   4-3. Third Operation Example
5. Modifications
6. Hardware Configuration Example
7. Summary

### <1. Overview>

First, an overview of an embodiment of the present disclosure will be described.

As described above, in recent years, an inference model that performs some inference on the basis of collected data has been developed.

According to the inference model, it is also possible to implement various inferences with high accuracy on the basis of unknown data. Therefore, generation and utilization of inference models are actively performed in various fields.

However, for example, in a case where a server collects data from a plurality of apparatuses and performs learning based on the data, protection of privacy is a problem.

Therefore, there is a technique called federated learning as a technique for protecting data privacy in a case of performing learning using data collected from a plurality of apparatuses.

In general federated learning, a learning instruction of a machine learning model is issued from a server to each of a plurality of apparatuses, and learning of a model is performed using data acquired in each of a plurality of terminals. The learning results are collected on the server side, and the model held on the server side is updated on the basis of the learning result.

Therefore, according to the federated learning, learning of the inference model can be performed without exposing data actually used for learning held by a plurality of apparatuses to an external apparatus.

However, in order to construct a machine learning system, it is not sufficient to perform optimization by learning of a machine learning model only once. In general, construction of a machine learning system can be roughly divided into three stages of preparation of learning data, model optimization (learning), and model operation (inference).

In the learning stage of the machine learning model, learning is performed for each of the plurality of trial patterns in order to select the model structure, the optimization method, and the hyperparameters. As a result, more optimal hyperparameters can be set.

Conventionally, in a machine learning model using federated learning, since data actually used for learning is not aggregated in a server, learning for selecting hyperparameters as described above has been performed by a plurality of terminals.

More specifically, a learning instruction using each setting value is transmitted from the server to a plurality of terminals for each of a plurality of trial patterns of the setting values of the hyperparameters. Each of the plurality of terminals performs learning using data acquired in the plurality of terminals as learning data by using the received setting values of the hyperparameters. The server aggregates learning results from a plurality of terminals, and updates parameters of the model on the basis of the aggregation results. The server redistributes the parameters of the updated model to the plurality of terminals. The above processing is repeated until the learning converges.

When the above series of processing is repeated and the learning using one trial pattern of the hyperparameter setting values converges, the above series of processing is similarly repeated for the trial patterns of the remaining hyperparameter setting values.

Therefore, for example, assuming that the above-described series of processing needs to be repeated 10 times before convergence of learning by one hyperparameter trial pattern, in a case where there are 10 types of trial patterns, a plurality of terminals needs to perform learning 10 times × 10 types = 100 times.

Here, as various trial patterns are tried as the setting values of the hyperparameters, more optimal hyperparameters can be set. On the other hand, there is a disadvantage that an increase in the trial patterns of the hyperparameters leads to an increase in time and processing load required for learning for selecting the hyperparameters.

Further, in a case where the computation capability of the plurality of terminals is low, it is desirable that the number of trial patterns of hyperparameters is as small as possible. As a result, the number of times of learning performed by the plurality of terminals for selecting the hyperparameters is reduced. However, when the number of trial patterns is reduced, there is a possibility that the inference accuracy of the model is sacrificed.

In addition, the inference accuracy of the machine learning model is greatly affected by the quality of the learning data. Therefore, in the preparation stage of the learning data, it is desirable that invalid data such as an abnormal value in the data and an invalid value by a malicious user is detected and corrected.

However, in general federated learning, since data actually used for learning is not aggregated on the server side, there is a problem that it is difficult for the server side to detect invalid data.

Furthermore, after the transition to the inference stage (hereinafter, also referred to as an operation stage) using the learned model, the tendency of the data acquired by the terminal may change due to a factor such as a change in the social environment. In this case, a deviation may occur between the learning data at the time when the model learning is performed and the data acquired in the inference stage. In such a case, it is desirable that the model is relearned.

However, in general federated learning, since data actually used for learning is held by a terminal, it is difficult for a server side to detect a change in data tendency.

The technical idea according to an embodiment of the present disclosure has been conceived focusing on the above points, and realizes both ensuring security of a machine learning model by federated learning and higher inference accuracy.

For this purpose, the information processing apparatus 20 according to an embodiment of the present disclosure includes a communication unit 250 that acquires privacy-protected data, which is data obtained by executing privacy protection processing on local data, on the basis of data (hereinafter, local data) actually used for learning and acquired in each of the plurality of terminals 10. The communication unit 250 is an example of an acquisition unit of the information processing apparatus 20.

Furthermore, the information processing apparatus 20 according to an embodiment of the present disclosure includes a learning unit 230 that learns the inference model on the basis of the collected privacy-protected data. Further, the learning unit 230 distributes the inference model including the hyperparameter information set on the basis of the result of the learning to the terminal 10.

Furthermore, the learning unit 230 of the information processing apparatus 20 according to an embodiment of the present disclosure updates the above-described inference model by using update information of a model obtained by performing learning of the distributed inference model using the local data as learning data by each of the plurality of terminals.

According to the processing as described above, local data is not collected on the information processing apparatus 20 side. Therefore, it is possible to protect privacy of data collected for learning the inference model.

Furthermore, according to the processing as described above, the information processing apparatus 20 performs learning on the basis of privacy-protected data that is data obtained by performing privacy protection processing on local data that is data actually used for learning. As a result, learning for trial of hyperparameters is performed on the basis of data closer to local data while protecting privacy information. Therefore, improvement in inference accuracy of the above-described inference model can be expected.

Furthermore, according to the processing as described above, in each of the plurality of terminals 10, the inference model is learned using the hyperparameters distributed from the information processing apparatus 20. Therefore, in the terminal 10, learning for trial of the hyperparameters is unnecessary. Therefore, the processing load of learning on the terminal 10 side is reduced.

Furthermore, the information processing apparatus 20 according to an embodiment of the present disclosure performs aggregation processing of privacy-protected data. The information processing apparatus 20 distributes tendency information indicating a statistical data tendency of the local data to the plurality of terminals 10 on the basis of the result of the aggregation processing.

Furthermore, the information processing apparatus 20 according to an embodiment of the present disclosure monitors a change in the distribution tendency of the local data on the basis of the aggregation result of the privacy-protected data.

Furthermore, when it is detected that the distribution tendency of the local data has changed, the information processing apparatus 20 relearns the inference model.

According to the processing as described above, in the plurality of terminals 10, the abnormal value included in the learning data can be detected on the basis of the tendency information indicating the distribution tendency of the local data.

In addition, according to the processing as described above, the relearning of the inference model according to the change in the tendency of the local data can be performed even after the inference model transitions to the operation stage.

Hereinafter, a system configuration example for implementing the above will be described in detail.

### <2. System Configuration Example>

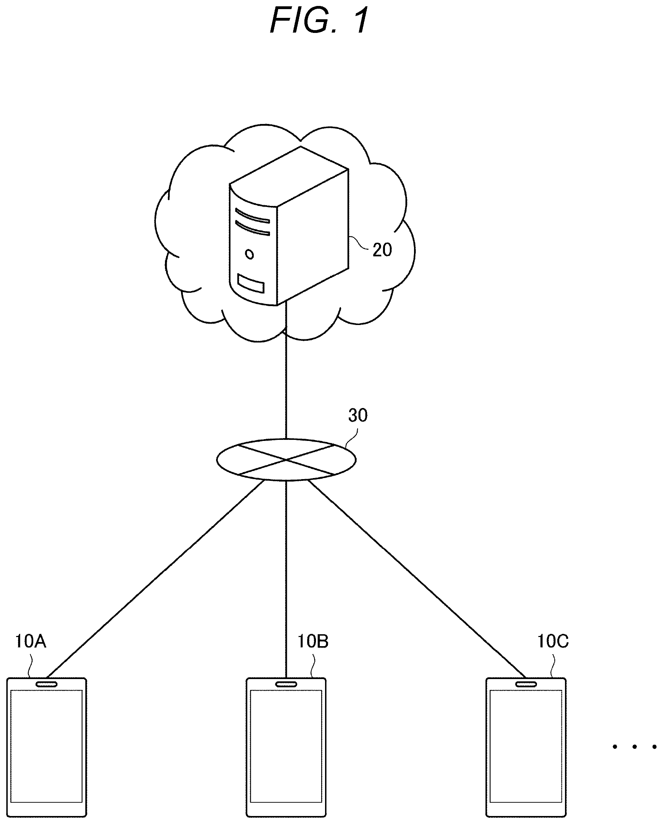

Fig. 1 is an explanatory diagram illustrating a configuration example of an information processing system according to an embodiment of the present disclosure.

As illustrated in Fig. 1, an information processing system according to an embodiment of the present disclosure includes a plurality of terminals 10 and an information processing apparatus 20.

The terminals 10 and the information processing apparatus 20 are communicably connected to each other via a network 30.

Note that Fig. 1 illustrates a case where the information processing system according to the present embodiment includes three terminals 10 of the terminal 10A, the terminal 10B, and the terminal 10C, but the number of terminals 10 according to the present embodiment is not particularly limited. For example, the information processing system according to the present embodiment may include two terminals 10. Alternatively, the information processing system according to the present embodiment may include three or more terminals 10.

Furthermore, although Fig. 1 illustrates a case where the terminal 10 is implemented by a smartphone, the terminal 10 may be implemented by another information processing terminal. For example, the terminal 10 may be implemented by a personal computer (PC), a tablet terminal, a game machine, a wearable device, or the like.

### (Terminal 10)

The terminal 10 according to the present embodiment learns the inference model distributed from the information processing apparatus 20 using the acquired local data as learning data.

The terminal 10 transmits update information of the inference model to the information processing apparatus 20 on the basis of the learning result. The update information may be, for example, an updated parameter obtained as a result of learning. Alternatively, it may be difference information between the parameters before and after the update.

Furthermore, the terminal 10 according to the present embodiment generates privacy-protected data by performing privacy protection processing on the acquired local data.

The terminal 10 transmits the generated privacy-protected data to the information processing apparatus 20.

Furthermore, the terminal 10 according to the present embodiment may receive tendency information indicating the data tendency of the local data distributed from the information processing apparatus 20.

The terminal 10 may detect invalid data such as an abnormal value or an invalid value among the newly acquired local data on the basis of the tendency information. The terminal 10 may generate the privacy protection information on the basis of the local data excluding the detected invalid data.

### (Information Processing Apparatus 20)

The information processing apparatus 20 according to the present embodiment distributes the inference model generated on the basis of the privacy protection information acquired from the plurality of terminals 10 to the terminals 10.

Furthermore, the information processing apparatus 20 according to the present embodiment receives the update information of the above-described inference model from the plurality of terminals 10, and updates the inference model on the basis of the update information.

The information processing apparatus 20 according to the present embodiment distributes update information (update model, hyperparameters, and the like) from the information processing apparatus 20 regarding the updated inference model to the plurality of terminals 10.

### (Network 30)

The network 30 according to the present embodiment mediates communication between the terminal 10 and the information processing apparatus 20.

### <3. Functional Configuration Example>

### <<3-1. Configuration Example of Terminal 10>>

Next, a configuration example of the terminal 10 according to the present embodiment will be described in detail.

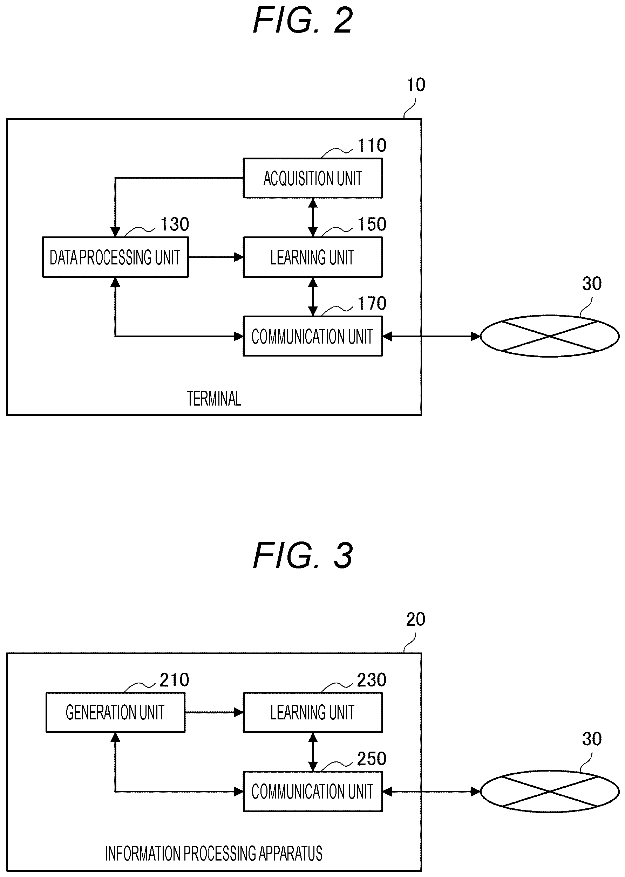

Fig. 2 is a block diagram illustrating a configuration example of the terminal 10 according to the present embodiment.

As illustrated in Fig. 2, the terminal 10 according to the present embodiment may include an acquisition unit 110, a data processing unit 130, a learning unit 150, and a communication unit 170.

### (Acquisition Unit 110)

The acquisition unit 110 according to the present embodiment collects various data.

The data collected by the acquisition unit 110 may be used as learning data of an inference model in the terminal 10.

The acquisition unit 110 may include various sensors for collecting sensor information that can be used as an element of learning data of an inference model in the terminal 10.

For example, the acquisition unit 110 may acquire information such as a communication speed or a bandwidth related to wireless communication between the communication unit 170 and other apparatuses.

Alternatively, the acquisition unit 110 may acquire various data such as sound data, character data, or image data used as learning data from an external apparatus such as an external storage apparatus. The image data may be, for example, a medical image.

Hereinafter, the data collected by the acquisition unit 110 and used as the learning data of the inference model in the terminal 10 is referred to as local data.

### (Data Processing Unit 130)

The data processing unit 130 according to the present embodiment has a function of generating privacy-protected data on the basis of the local data acquired by the acquisition unit 110.

More specifically, the data processing unit 130 performs privacy protection processing on the local data. The privacy protection processing refers to processing of making it difficult to specify and restore an element to be kept secret such as privacy information included in the local data.

At this time, several data formats are conceivable as the privacy-protected data generated by the data processing unit 130.

For example, the privacy-protected data generated by the data processing unit 130 may be data obtained by performing data conversion processing satisfying differential privacy on the local data. The data conversion processing may be processing of assigning a random number having a predetermined strength to each element included in the local data.

In addition, for example, a Laplace mechanism or a Gaussian mechanism may be used as the data conversion processing satisfying the differential privacy.

Alternatively, the privacy-protected data may be data generated by the data processing unit 130 performing data conversion processing for reducing the dimension of data on the local data. In this case, the data processing unit 130 may reduce the dimension of the local data by using an algorithm of Auto-Encoder.

Alternatively, the privacy-protected data generated by the data processing unit 130 may be data generated by performing anonymization processing on the local data.

Alternatively, as another example of the generation of the privacy-protected data by the data processing unit 130, the statistical measures of the local data may be calculated by the data processing unit 130. The privacy-protected data may be statistical data generated by the data processing unit 130 performing data conversion processing that satisfies differential privacy on the calculated statistical measures of the local data.

Alternatively, the privacy-protected data may be data generated by the data processing unit 130 performing encryption processing satisfying the requirement of secret calculation on the calculated statistical measures of the local data.

Furthermore, the data processing unit 130 according to an embodiment of the present disclosure may acquire tendency information of data in the entire plurality of terminals 10 from the information processing apparatus 20.

The data processing unit 130 may detect an abnormal value included in the local data newly acquired by the acquisition unit 110 on the basis of the tendency information.

Further, the data processing unit 130 may perform processing of correcting or excluding data regarded as an abnormal value from the local data. The data processing unit 130 may generate the privacy-protected data on the basis of the local data in which the data regarded as the abnormal value is corrected or excluded.

### (Learning Unit 150)

The learning unit 150 according to the present embodiment learns the inference model distributed from the information processing apparatus 20 using the local data acquired by the acquisition unit 110 as learning data.

The learning unit 150 outputs the update information of the inference model on the basis of the result of the above-described learning. The update information may be, for example, difference information of parameters of the inference model before and after learning.

### (Communication Unit 170)

The communication unit 170 according to the present embodiment communicates with the information processing apparatus 20 via the network 30.

For example, the communication unit 170 transmits the privacy-protected data generated by the data processing unit 130 to the information processing apparatus 20.

Furthermore, the communication unit 170 transmits update information of the inference model output as a result of learning by the learning unit 150 to the information processing apparatus 20.

Furthermore, the communication unit 170 receives, from the information processing apparatus 20, an inference model, update information of the inference model, and the like from the information processing apparatus 20.

The configuration example of the terminal 10 according to the present embodiment has been described above. Note that the above configuration described with reference to Fig. 2 is merely an example, and the configuration of the terminal 10 according to the present embodiment is not limited to such an example.

The terminal 10 according to the present embodiment may further include, for example, an input unit that receives an input of information by the user, a display unit that displays various types of information, and the like.

The configuration of the terminal 10 according to the present embodiment can be flexibly modified according to specifications and operations.

### <<3-2. Configuration Example of Information Processing Apparatus 20>>

Next, a configuration example of the information processing apparatus 20 according to the present embodiment will be described in detail.

Fig. 3 is a block diagram illustrating a configuration example of the information processing apparatus 20 according to the present embodiment.

As illustrated in Fig. 3, the information processing apparatus 20 according to the present embodiment may include a generation unit 210, a learning unit 230, and a communication unit 250.

### (Generation Unit 210)

The generation unit 210 according to the present embodiment performs aggregation processing of privacy-protected data acquired from the terminal 10.

For example, in a case where the privacy-protected data is subjected to the encryption processing, the generation unit 210 may perform the aggregation processing in a state where the privacy-protected data is encrypted without decrypting the privacy-protected data by using the secret calculation method.

In addition, the generation unit 210 estimates the distribution of the local data on the basis of the result of the aggregation processing of the privacy-protected data.

In addition, in a case where the privacy-protected data is statistical measures of the local data, the generation unit 210 may generate the combined data on the basis of the estimated distribution of the local data. In the present disclosure, the combined data refers to data sampled in a pseudo manner on the basis of the estimated distribution of the local data.

In addition, the generation unit 210 may generate tendency information indicating the estimation result of the statistical data tendency of the local data on the basis of the result of the aggregation processing of the above-described privacy-protected data.

The tendency information may be generated by the generation unit 210 periodically collecting the privacy-protected data from the plurality of terminals 10 and calculating a difference between the aggregation processing results of the privacy-protected data for each certain period.

Note that the data set itself of the privacy-protected data collected from the terminals 10 and accumulated in the information processing apparatus 20 may be used as the tendency information.

The generation unit 210 may cause the communication unit 250 to distribute the tendency information to each of the plurality of terminals 10.

Furthermore, the generation unit 210 may monitor a change in the distribution tendency of the local data on the basis of the result of the aggregation processing of the privacy-protected data.

### (Learning Unit 230)

The learning unit 230 according to the present embodiment learns an inference model by federated learning.

The inference model may be a convolutional neural network (CNN). In this case, for example, the information processing apparatus 20 may perform image recognition of the medical image acquired by the terminal 10 using the inference model and diagnose a disease estimated from the medical image on the basis of the recognition result.

Alternatively, the inference model may be a Long Short-Term Memory (LSTM) model capable of handling time-series data. In this case, for example, the information processing apparatus 20 may perform the quality prediction of the wireless communication based on the wireless communication quality information such as the communication speed acquired in the terminal 10 using the inference model.

The learning unit 230 performs learning for selecting hyperparameters of the above-described inference model using, as learning data, privacy-protected data acquired from the terminal 10 or combined data generated on the basis of the privacy-protected data.

More specifically, the learning unit 230 may learn the inference model so that all trial patterns are covered according to the trial patterns of the combination of the candidate values of the hyperparameters determined by the administrator of the above-described inference model.

The hyperparameters of the inference model may be set by the administrator of the inference model on the basis of the result of learning by the learning unit 230.

Furthermore, the initial parameters of the inference model may be acquired on the basis of the result of learning for the hyperparameter trial by the learning unit 230.

The learning unit 230 distributes the above-described inference model including the set hyperparameter information to the plurality of terminals 10.

Furthermore, the learning unit 230 according to the present embodiment updates the inference model on the basis of the update information of the inference model acquired from the terminal 10.

Furthermore, in a case where the generation unit 210 detects that the distribution tendency of the local data has changed, the learning unit 230 according to the present embodiment may perform relearning of the above-described inference model using the federated learning technology.

### (Communication Unit 250)

The communication unit 250 according to the present embodiment communicates with the plurality of terminals 10 via the network 30. The communication unit 250 is an example of an acquisition unit of the information processing apparatus 20.

For example, the communication unit 250 transmits the above-described inference model including the hyperparameter information set on the basis of the result of learning by the learning unit 230 and update information of the inference model from the information processing apparatus 20 side to the terminal 10.

Furthermore, the communication unit 250 receives the update information of the inference model from the plurality of terminals 10.

The configuration example of the information processing apparatus 20 according to the present embodiment has been described above. Note that the above description described with reference to Fig. 3 is merely an example, and the configuration of the information processing apparatus 20 according to the present embodiment is not limited to such an example.

The information processing apparatus 20 according to the present embodiment may further include, for example, an input unit that receives an input of information by the user, a display unit that displays various types of information, and the like.

The configuration of the information processing apparatus 20 according to the present embodiment can be flexibly modified according to specifications and operations.

### <4. Operation Example>

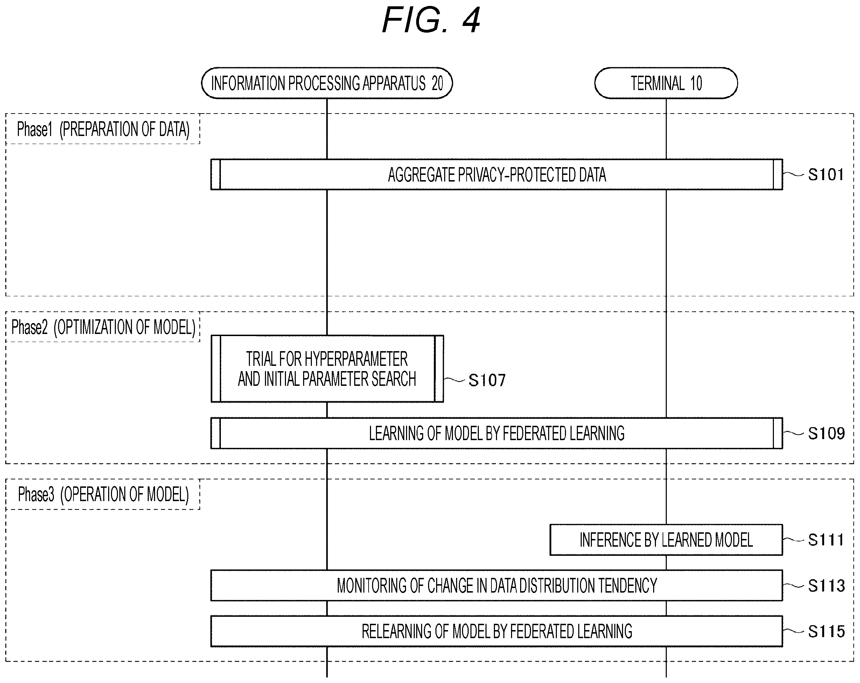

Next, an operation example of the information processing system according to an embodiment of the present disclosure will be described with reference to Figs. 4 to 16.

### <<4-1. First Operation Example>>

First, a first operation example of the information processing system according to the present embodiment will be described with reference to Figs. 4 to 8. In the first operation example, an example in which the privacy-protected data generated by the data processing unit 130 of the terminal 10 is data generated by performing the data conversion processing satisfying the differential privacy and/or the processing of reducing the dimension of the data on the local data will be described.

Fig. 4 is a sequence diagram for explaining the first operation example of the information processing system according to the present embodiment. The sequence diagram illustrated in Fig. 4 illustrates an overview of a flow of processing in the first operation example.

First, the information processing apparatus 20 aggregates the privacy-protected data from each of the plurality of terminals 10 (S101).

Next, the information processing apparatus 20 learns an inference model according to a trial pattern for hyperparameter and initial parameter search on the basis of the aggregated privacy-protected data (S107).

Next, the information processing apparatus 20 and the plurality of terminals 10 learn an inference model by federated learning (S109).

The plurality of terminals 10 performs inference using the inference model learned in each terminal 10 (S111).

Thereafter, the information processing apparatus 20 and the terminal 10 monitor a change in the data distribution tendency of the local data (S113).

When it is detected that the data distribution tendency has changed, the information processing apparatus 20 and the terminal 10 relearn the model by the federated learning (S115).

The first operation example according to the present embodiment has been described above with reference to Fig. 4. Next, a more detailed processing flow will be described for S101, S107, and S109 illustrated in Fig. 4.

### ((Subroutine S101))

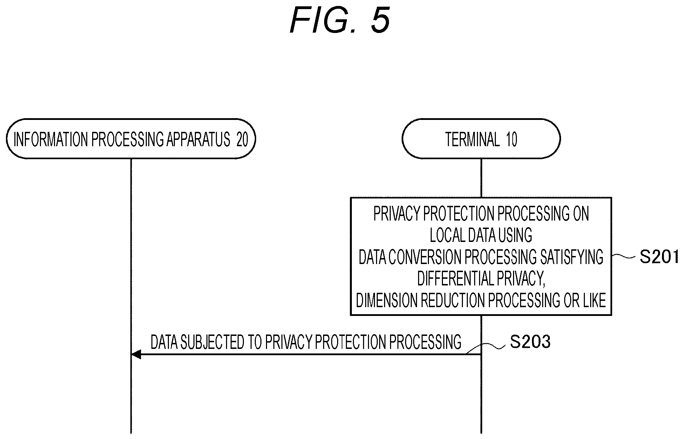

Fig. 5 is a sequence diagram illustrating a flow of processing of the subroutine of S101 in the sequence diagram illustrated in Fig. 4.

As illustrated in Fig. 5, first, the data processing unit 130 of each of the plurality of terminals 10 performs privacy protection processing on the local data by a method such as data conversion processing satisfying differential privacy or dimension reduction processing (S201).

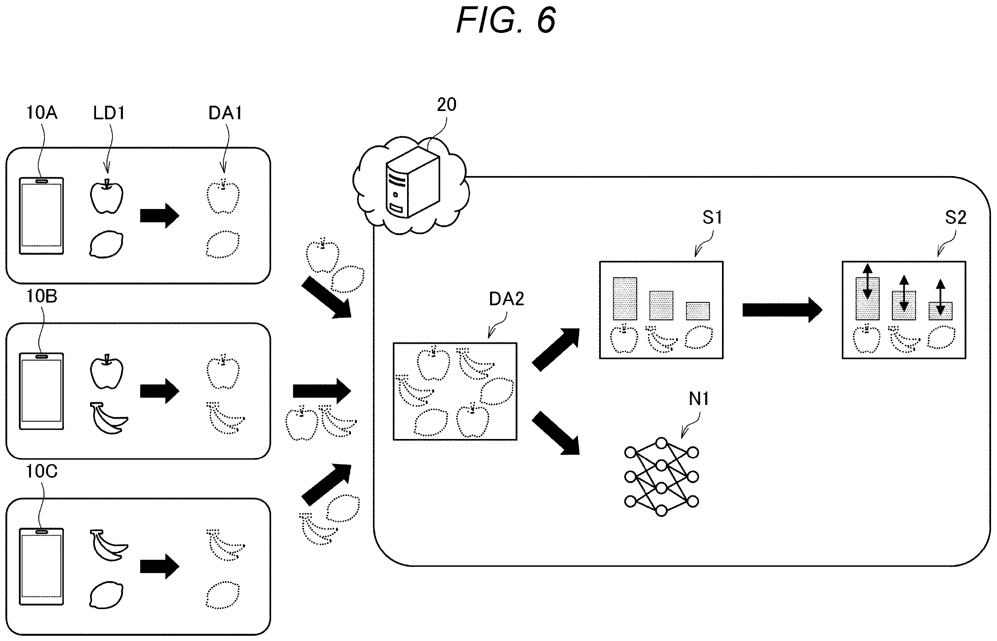

Here, the above-described privacy protection processing will be described with reference to Fig. 6. Fig. 6 is a diagram for explaining an example of generation processing of privacy-protected data by the data processing unit 130. The local data LD1 illustrated in Fig. 6 is an example of the local data collected by the acquisition unit 110 of the terminal 10A.

The converted data DA1 illustrated in Fig. 6 is an example of privacy-protected data generated by the data processing unit 130 performing the data conversion processing as described above on the basis of the local data LD1.

Similarly, in each of the other terminals 10 other than the terminal 10A, the privacy-protected data is generated on the basis of the local data.

The communication unit 170 of the terminal 10 transmits the data subjected to the privacy protection processing to the information processing apparatus 20 as privacy-protected data (S203).

The information processing apparatus 20 collects privacy-protected data from the terminal 10 and performs aggregation processing of the privacy-protected data. The converted data DA2 illustrated in Fig. 6 is an example of a data set of privacy-protected data collected by the information processing apparatus 20.

Furthermore, a model N1 illustrated in Fig. 6 indicates an inference model in which the information processing apparatus 20 performs learning. As illustrated in Fig. 6, the information processing apparatus 20 can learn the model N1 on the basis of the converted data DA2.

In addition, the information processing apparatus 20 can aggregate statistical measures of the privacy-protected data of the plurality of terminals 10 as a whole on the basis of the converted data DA2. The statistical measures S1 illustrated in Fig. 6 are an example of statistical measures of the aggregated privacy-protected data.

In the present operation example, the privacy protection information is data to which privacy protection processing such as data conversion processing that satisfies differential privacy is applied to the local data. Therefore, the information processing apparatus 20 can estimate the statistical measures of the local data, which is the original data, on the basis of the statistical measures S1, which is the aggregation processing result of the privacy protection information.

Furthermore, the information processing apparatus 20 may detect a change in the data tendency acquired by the terminal 10 on the basis of the statistical measures S1. The statistical measures S2 indicate an example of tendency information indicating a change in a data tendency detected by the terminal 10.

The subroutine of S101 in the sequence diagram illustrated in Fig. 4 has been described above with reference to Fig. 5.

### ((Subroutine S107))

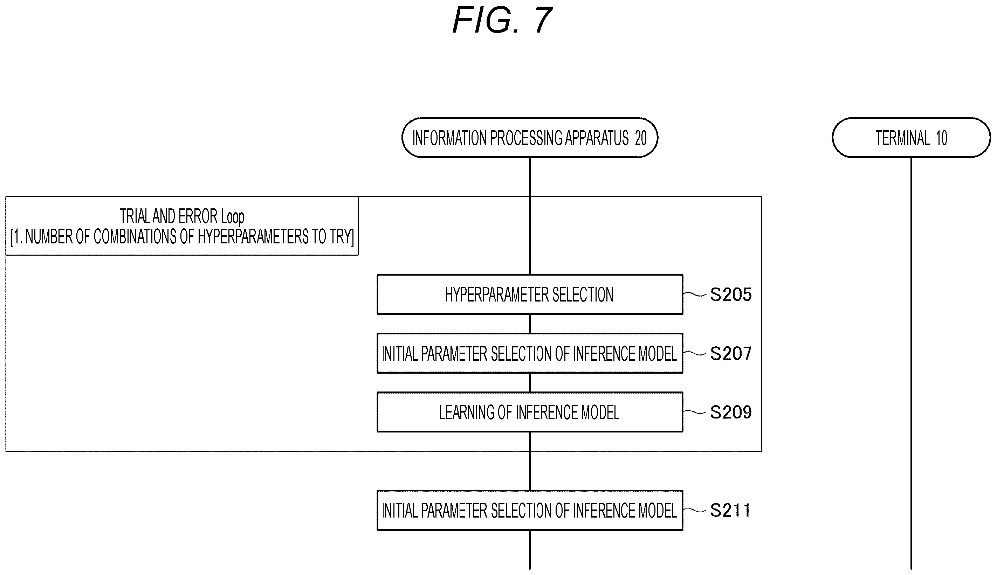

Fig. 7 is a sequence diagram illustrating a flow of processing of the subroutine of S107 in the sequence diagram illustrated in Fig. 4.

As illustrated in Fig. 7, the information processing apparatus 20 performs learning according to trial patterns for selecting hyperparameters of an inference model on the basis of the privacy-protected data received from the terminal 10.

First, one combination of hyperparameters is selected from among trial patterns of candidate values of hyperparameters determined by the administrator of the inference model (S205).

Next, the learning unit 230 sets initial parameters of the inference model for performing learning of the inference model using the selected hyperparameters (S207).

The learning unit 230 learns the inference model using the privacy-protected data as learning data by using the selected hyperparameters and initial parameters (S209).

The information processing apparatus 20 may repeat the processing of S205 to S209 until all trial patterns of hyperparameters are covered.

When the learning for all the trial patterns is completed, the hyperparameters of the inference model are set by the administrator of the inference model on the basis of the result of the learning. The learning unit 230 sets initial parameters of the inference model according to the set hyperparameters (S211).

The flow of the process of the subroutine in S107 in the sequence diagram illustrated in Fig. 4 has been described above with reference to Fig. 7.

Note that, in the above description, an example has been described in which learning for selecting hyperparameters is performed in the information processing apparatus 20, but the present disclosure is not limited to such an example. For example, after the learning processing using the selected hyperparameters and initial parameters in S209 described above, the terminal 10 may evaluate the selected hyperparameters and initial parameters on the basis of the result of the learning.

Further, in S211, the hyperparameters of the inference model may be set on the basis of the evaluation result by the terminal 10.

### ((Subroutine S109))

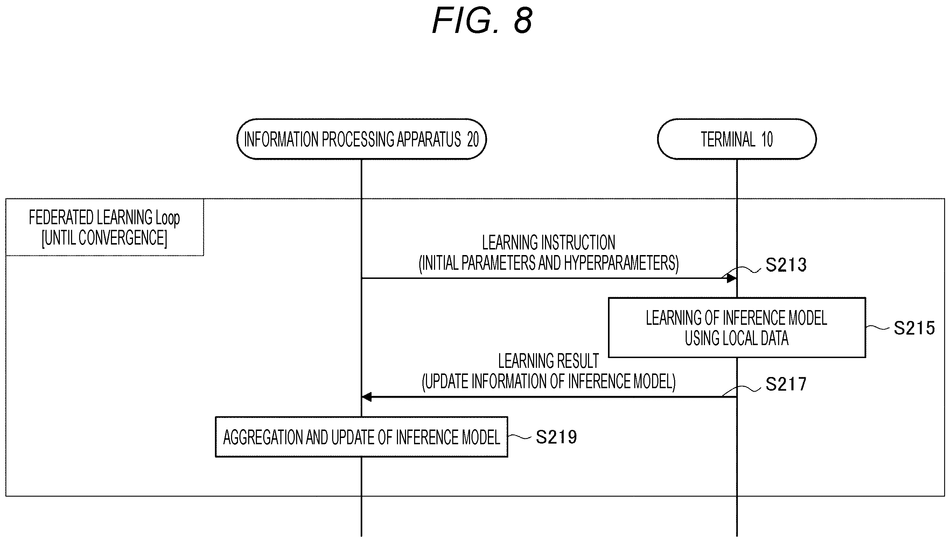

Next, Fig. 8 is a sequence diagram illustrating a flow of processing of the subroutine of S109 in the sequence diagram illustrated in Fig. 4.

As illustrated in Fig. 8, the learning unit 230 of the information processing apparatus 20 causes the communication unit 250 to transmit the learning instruction of the inference model to the terminal 10 together with the information of the hyperparameters and the initial parameters set in S107 illustrated in Fig. 4 (S213).

Each of the plurality of terminals 10 learns the inference model using the local data as learning data (S215).

Each of the plurality of terminals 10 transmits update information of the inference model to the information processing apparatus 20 on the basis of the result of learning (S217).

The learning unit 230 of the information processing apparatus 20 aggregates the update information received from the plurality of terminals 10 and updates the inference model held by the information processing apparatus 20 (S219).

The first operation example of the information processing system according to the present embodiment has been described above with reference to Figs. 4 to 8.

### <<4-2. Second Operation Example>>

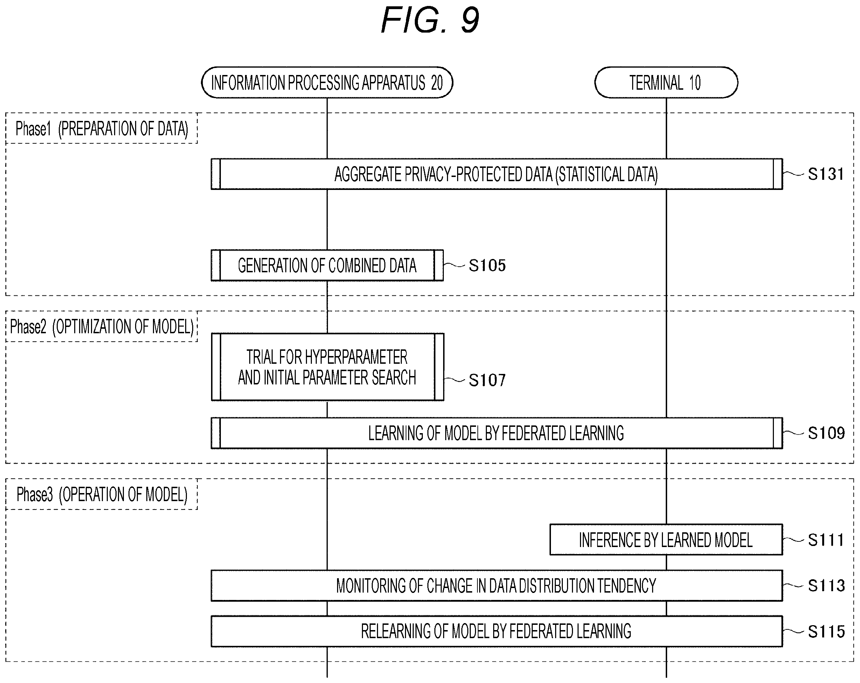

Next, a second operation example of the information processing system according to the present embodiment will be described with reference to Figs. 9 to 11.

In the present operation example, an example in which the privacy-protected data is statistical measures of the local data generated by each of the plurality of terminals 10 will be described. The information processing apparatus 20 estimates the distribution of the local data on the basis of the statistical measures of the local data. The information processing apparatus 20 can learn the inference model using the combined data generated on the basis of the estimated distribution of the local data as learning data.

Fig. 9 is a sequence diagram for explaining the second operation example of the information processing system according to the present embodiment. Note that, since S107, S109, S111, S113, and S115 illustrated in Fig. 9 are as described above with reference to Fig. 4, redundant description will be omitted.

As illustrated in Fig. 9, the information processing apparatus 20 aggregates the statistical data of the local data generated by the terminal 10 as the privacy-protected data (S131).

Next, the information processing apparatus 20 generates combined data on the basis of the aggregated privacy-protected data (statistical data) (S105).

In the present operation example, the information processing apparatus 203 of the information processing apparatus 20 learns the inference model using the combined data generated in S105 as learning data. Next, the processing of S107 to S115 is performed.

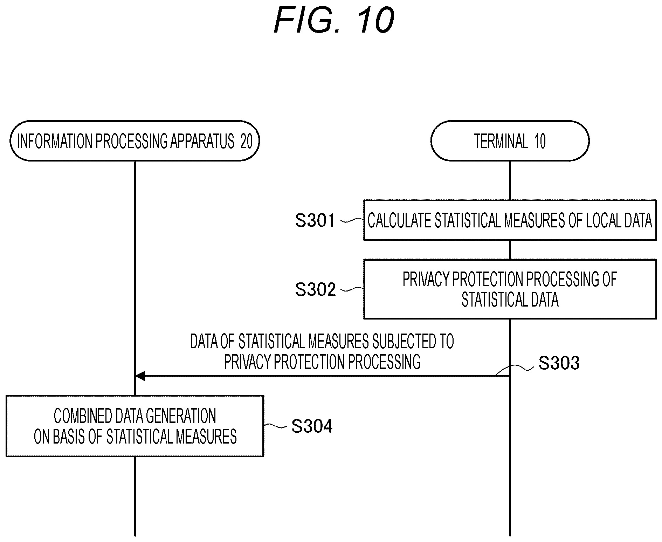

Fig. 10 is a sequence diagram for explaining a flow of processing of subroutines of S131 and S105 in the sequence diagram illustrated in Fig. 9.

### ((Subroutine S131))

As illustrated in Fig. 10, the data processing units 130 of the plurality of terminals 10 calculate statistical measures of the local data (S301).

The data processing unit 130 of the terminal 10 performs privacy protection processing by performing predetermined data conversion processing on the statistical data (S302).

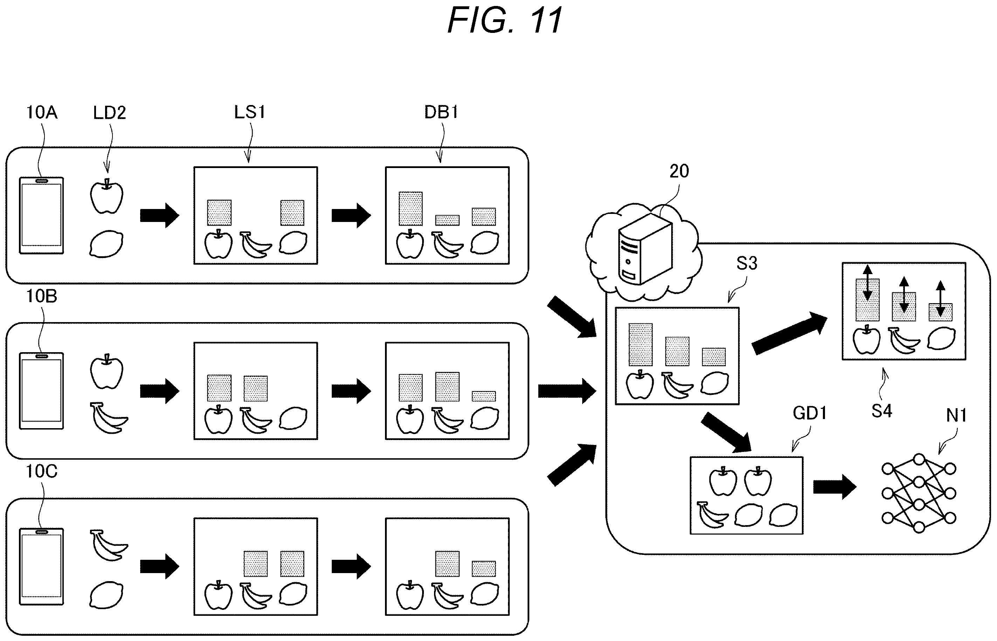

Here, privacy protection processing by the data processing unit 130 in the present operation example will be described with reference to Fig. 11. Fig. 11 is a diagram for explaining another example of generation processing of privacy-protected data by the data processing unit 130. The local data LD2 illustrated in Fig. 11 is an example of the local data collected by the acquisition unit 110 of the terminal 10A.

In addition, the local data statistical measures LS1 illustrated in Fig. 11 indicate the statistical data of the local data calculated by the data processing unit 130 of the terminal 10A. The converted statistical measures DB1 indicate an example of privacy-protected data generated by the data processing unit 130 performing the data conversion processing satisfying the differential privacy on the local data statistical measures LS1.

Next, the data processing unit 130 of the terminal 10 causes the communication unit 170 to transmit the data of the statistical measures subjected to the privacy protection processing to the information processing apparatus 20 as privacy-protected data (S303).

### ((Subroutine S105))

The information processing apparatus 20 estimates a distribution of local data in the entire plurality of terminals 10 on the basis of the statistical data subjected to the privacy protection processing received from each of the plurality of terminals 10. The information processing apparatus 20 generates combined data on the basis of the estimated distribution of the local data (S304).

In the example illustrated in Fig. 11, the statistical measures S3 are an example of the statistical measures of the local data aggregated by the information processing apparatus 20. The information processing apparatus 20 estimates the distribution of the local data on the basis of the statistical measures S3, and generates the combined data GD1 on the basis of the estimated distribution.

The information processing apparatus 20 may learn the model N1 using the combined data GD1 as learning data.

Furthermore, the information processing apparatus 20 may calculate the statistical measures S4 as the tendency information on the basis of the statistical measures S3.

The second operation example of the information processing system according to the present embodiment has been described above with reference to Figs. 9 to 11.

### <<4-3. Third Operation Example>>

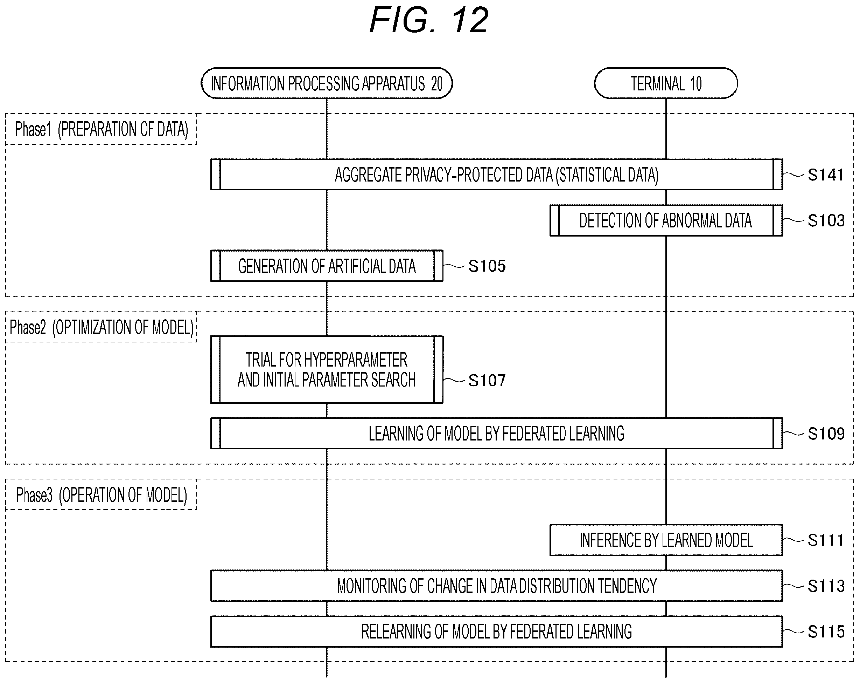

Next, a third operation example of the information processing system according to the present embodiment will be described with reference to Figs. 12 to 16.

In the third operation example, an example in which an abnormal value is detected in each of the plurality of terminals 10 by using tendency information indicating a distribution tendency of local data generated on the basis of the privacy-protected data by the information processing apparatus 20 will be described in detail.

In the present operation example, an example in which the local data acquired by the plurality of terminals 10 is the statistical measures of the feature amount extracted from the input data such as the image and the label information associated with each feature amount will be described.

For example, the feature amount may be a feature amount extracted from a medical image. In addition, there may be a plurality of feature amounts.

Furthermore, in the present operation example, an example will be described in which the label information included in the local data is two types of labels of correct answer and incorrect answer in the binary classification problem for classifying whether the input data is correct or incorrect.

Fig. 12 is a sequence diagram for explaining the third operation example of the information processing system according to the present embodiment. Note that S105, S107, S109, S111, S113, and S115 illustrated in Fig. 12 are as described above with reference to Figs. 4 and 9, and thus overlapping description is omitted.

As illustrated in Fig. 12, the information processing apparatus 20 and the terminal 10 perform processing of aggregating the statistical measures of the local data subjected to the privacy protection processing as the privacy protection information. At this time, the information processing apparatus 20 distributes tendency information indicating the data tendency of the local data estimated on the basis of the aggregation result of the privacy-protected data to each of the plurality of terminals 10 (S141).

Each of the plurality of terminals 10 detects an abnormal value included in the local data on the basis of the distributed tendency information (S103).

Furthermore, in the present operation example, when learning the model in S109, the terminal 10 performs learning using data obtained by excluding an abnormal value from the local data as learning data.

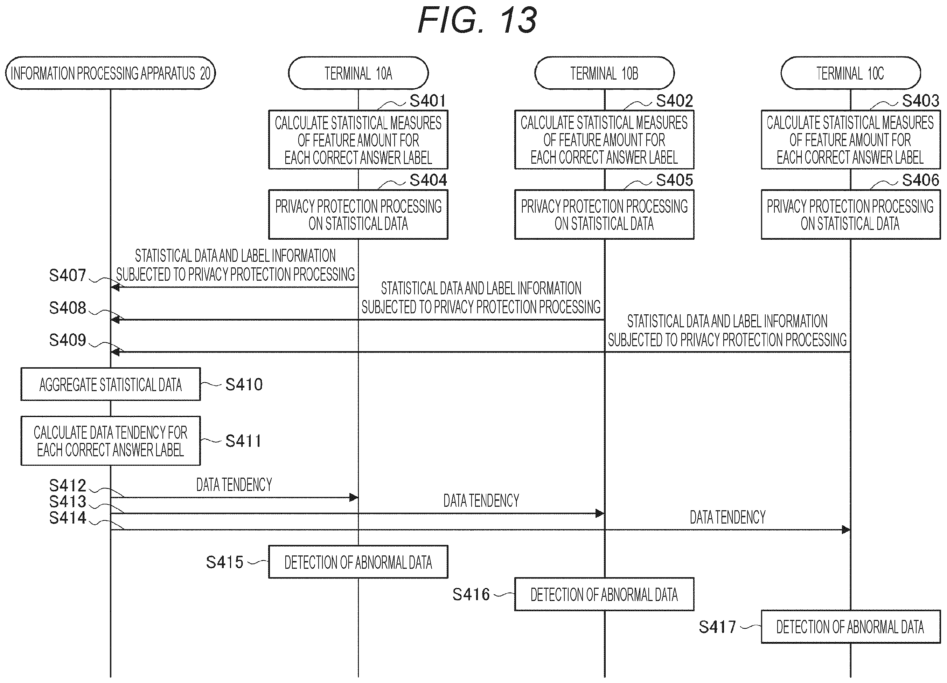

Fig. 13 is a sequence diagram for explaining a flow of processing of subroutines in S141 and S103 in the sequence diagram illustrated in Fig. 12.

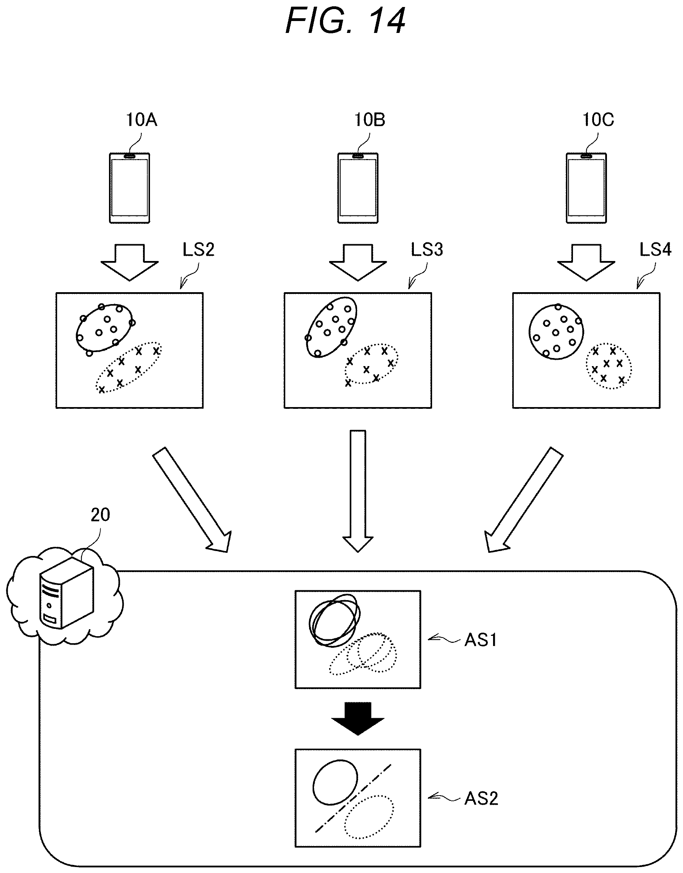

Furthermore, Fig. 14 is a diagram for explaining aggregation of privacy-protected data in the third operation example of the information processing system according to the present embodiment.

Note that, in Fig. 13, processing by the terminal 10A, the terminal 10B, and the terminal 10C is illustrated, but as described above, the number of terminals 10 according to the present embodiment is not limited to such an example. The information processing system according to the present embodiment may include two or more terminals 10.

### ((Subroutine S141))

As illustrated in Fig. 13, the data processing unit 130 of the terminal 10A calculates statistical measures of the feature amount for each correct answer label with respect to the feature amount included in the acquired local data (S401). Also in each of the terminal 10B and the terminal 10C, the statistical measures of the feature amount are calculated for each correct answer label (S402 and S403).

The terminal 10A performs privacy protection processing on the calculated statistical data (S404). The terminal 10B and the terminal 10C also perform privacy protection processing (S405 and S406).

The local data statistical measures LS2, the local data statistical measures LS3, and the local data statistical measures LS4 illustrated in Fig. 14 indicate privacy-protected data that is data obtained by performing privacy protection processing on the statistical data of the feature amount for each correct answer label calculated by the terminal 10A, the terminal 10B, and the terminal 10C, respectively.

Next, each of the plurality of terminals 10 transmits the statistical data and the label information subjected to the privacy protection processing to the information processing apparatus 20 (S407, S408 and S409).

The generation unit 210 of the information processing apparatus 20 performs aggregation processing of the statistical data received from the plurality of terminals 10 (S410).

The generation unit 210 calculates a data tendency (feature amount distribution) for each correct answer label on the basis of the aggregation processing result (S411).

The aggregation result AS1 illustrated in Fig. 14 indicates an aggregation processing result of the statistical data by the information processing apparatus 20. In addition, the aggregation result AS2 indicates tendency information which is a tendency of data for each correct answer label calculated on the basis of the aggregation result AS1.

The generation unit 210 of the information processing apparatus 20 distributes the calculated data tendency (tendency information) to each of the plurality of terminals 10 (S412, S413 and S414).

### ((Subroutine S103))

The terminal 10A detects an abnormal value included in the local data acquired by the acquisition unit 110 on the basis of the tendency information distributed from the information processing apparatus 20 (S415).

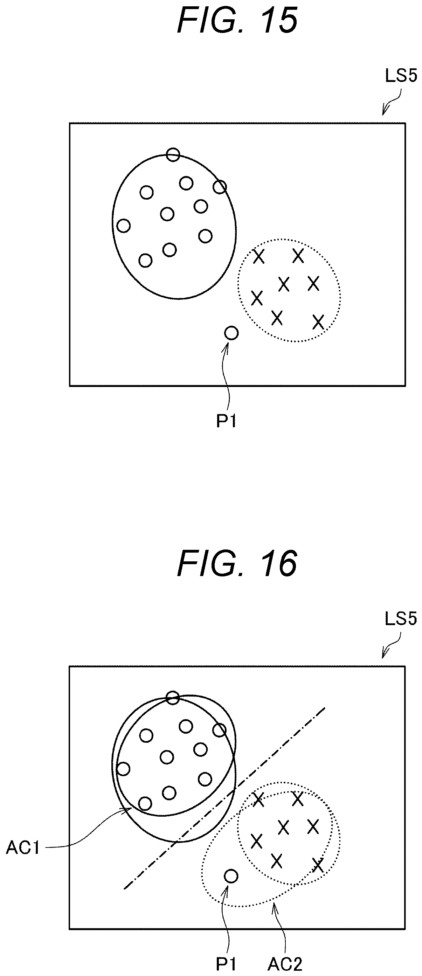

Fig. 15 is a conceptual diagram for explaining detection of an abnormal value in the third operation example of the present embodiment. The local data statistical measures LS5 illustrated in Fig. 15 indicate a distribution of the feature amount for each correct answer label included in the local data newly acquired by the acquisition unit 110 of the terminal 10.

Each point indicated by a circle included in the local data statistical measures LS5 indicates a distribution point of the feature amount to which a correct label is given. In addition, a distribution point indicated by X included in the local data statistical measures LS5 indicates a distribution point of the feature amount to which an incorrect label is given.

In addition, a sample point P1 indicates a distribution point of the feature amount, which is included in the local data statistical measures LS5 and to which a correct label is given.

In the example illustrated in Fig. 15, it is understood that the distribution points indicated by the circles to which the correct labels are given are approximately distributed in the range surrounded by the solid ellipse. On the other hand, it is understood that the distribution points indicated by X with incorrect labels are distributed in the range surrounded by the dotted ellipse.

Although the sample point P1 is a distribution point to which a correct label is given, it is understood that the sample point P1 is distributed at a position away from the range indicated by the solid ellipse in the distribution of the local data statistical measures LS5.

Therefore, the sample point P1 can be regarded as an abnormal value based on the distribution tendency of the local data acquired by the terminal 10A.

However, it is not certain whether or not the sample point P1 can be regarded as an abnormal value even in the distribution tendency of the local data when viewed from the plurality of terminals 10 as a whole only by the information of the distribution tendency of the local data obtained only by the terminal 10A.

Therefore, detection of an abnormal value in the present operation example will be described with reference to Fig. 16. Fig. 16 is another conceptual diagram for explaining detection of an abnormal value in the third operation example of the present embodiment. The distribution range AC1 and the distribution range AC2 illustrated in Fig. 16 indicate distribution tendencies of data based on tendency information distributed from the information processing apparatus 20 to the terminal 10A.

As illustrated in Fig. 16, the sample point P1 is not included in the distribution range of the distribution range AC1. Therefore, it is understood that the sample point P1 can also be regarded as an abnormal value in the distribution tendency of the local data in the entire plurality of terminals 10.

As described above, the terminal 10A can detect the abnormal value included in the local data with higher accuracy on the basis of the distribution tendency of the local data distributed from the information processing apparatus 20 in the entire plurality of terminals 10.

Also in the terminal 10B and the terminal 10C, the abnormal value included in the local data is detected using the tendency information distributed from the information processing apparatus 20 (S416 and S417).

The third operation example of the information processing system according to the present embodiment has been described above with reference to Figs. 12 to 16.

### <5. Modifications>

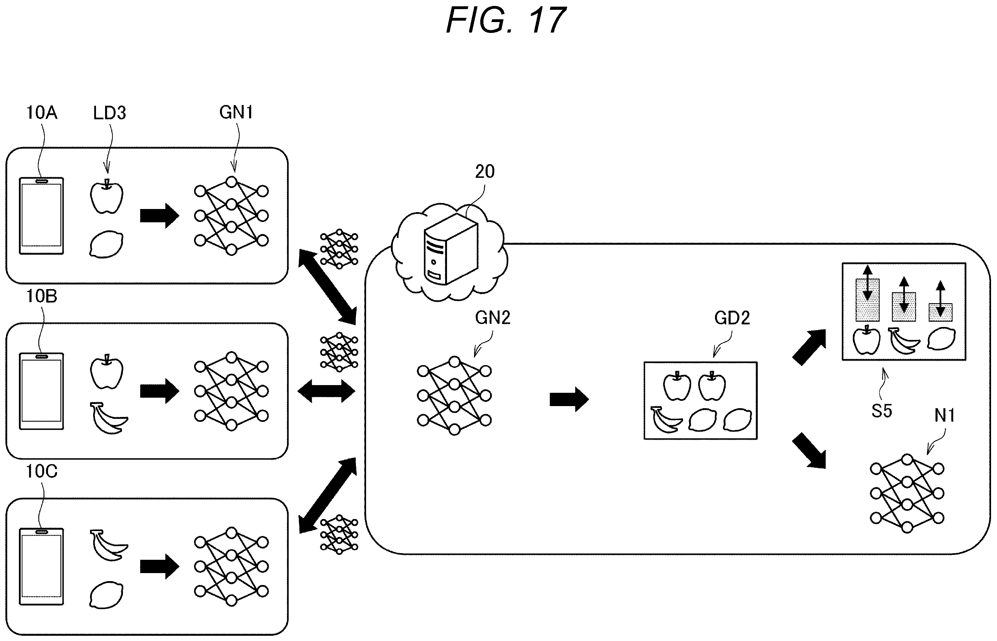

Next, modifications of the information processing system according to the present embodiment described above will be described with reference to Figs. 17 to 19.

In the present modification, the information processing apparatus 20 and the terminal 10 generate a generative model for generating combined data by federated learning. The information processing apparatus 20 learns the inference model using the combined data generated by the generative model as learning data.

Fig. 17 is a diagram for explaining generation of privacy-protected data in a modification of the present embodiment.

The local data LD3 illustrated in Fig. 17 indicates the local data acquired by the terminal 10A.

Furthermore, the generative model GN indicates a generative model generated by federated learning of the information processing apparatus 20 and the terminal 10. The generative model GN1 is a generative model in which learning is performed by each of the plurality of terminals 10, and is a model corresponding to the generative model GN2. The generative model GN2 is a generative model updated by the information processing apparatus 20 on the basis of each learning result of the generative model GN1.

The terminal 10A learns the generative model GN1 using the local data LD3 as learning data. The generative model GN1 indicates a learned generative model by the terminal 10A.

The terminal 10A transmits update information of the generative model obtained as a result of learning of the generative model GN1 to the information processing apparatus 20.

Also in the terminal 10 (terminal 10B or terminal 10C) other than the terminal 10A, learning of the generative model is similarly performed, and update information of the generative model is transmitted to the information processing apparatus 20.

The above generative model may be, for example, a model generated by a Differential Privacy Generative Adversarial Network (DPGAN) algorithm which is a generative model that prevents the learning data from being specified from the learned generative model by applying noise to the gradient and the parameters of the loss function in the learning process.

In this case, it is possible to prevent local data from being estimated from the update information of the generative model transmitted from the terminal 10 to the information processing apparatus 20. Therefore, the security of the information processing system according to the present embodiment can be further improved.

The information processing apparatus 20 may distribute the parameter information of the updated generative model GN2 or the updated generative model GN2 to each of the terminals 10.

The information processing apparatus 20 generates combined data using the above-described learned generative model. The combined data GD2 illustrated in Fig. 17 indicates combined data generated using the generative model GN2.

The information processing apparatus 20 may learn the model N1 using the combined data GD2 as learning data.

Furthermore, the information processing apparatus 20 may monitor the data tendency of the local data on the basis of the generated combined data. In the example illustrated in Fig. 17, the statistical measures S5 indicate data of tendency information generated from the statistical measures of the local data estimated on the basis of the combined data GD2.

According to the information processing system as in the above modification, learning of the inference model can be performed without the local data itself acquired in the terminal 10 being aggregated in the information processing apparatus 20. Therefore, it is possible to ensure protection of privacy in the present information processing system.

Furthermore, according to the present modification, the combined data is generated using the generative model generated using the local data as the learning data. As a result, combined data closer to data actually used for learning can be generated. Therefore, the inference accuracy of the inference model by the information processing apparatus 20 can be improved.

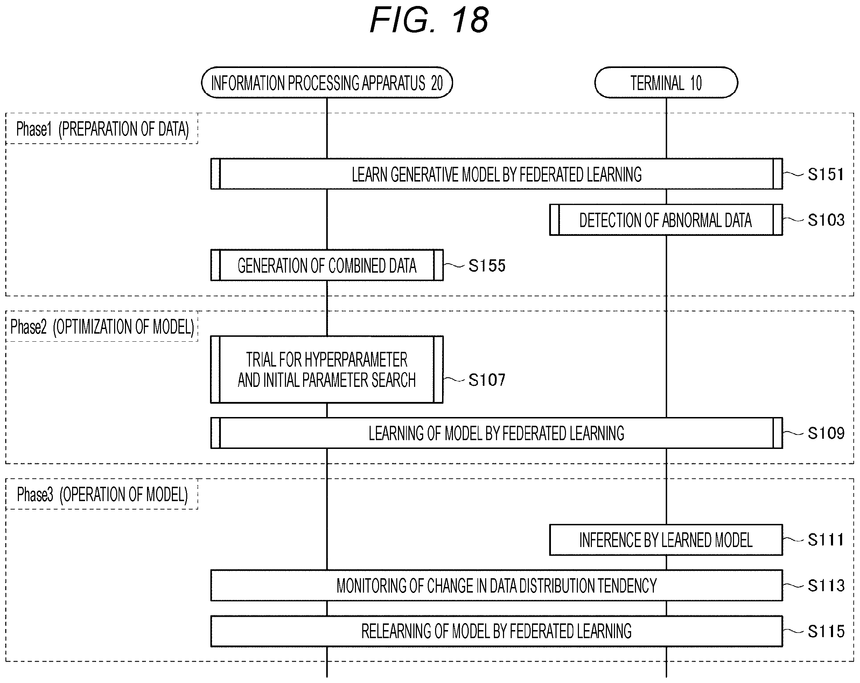

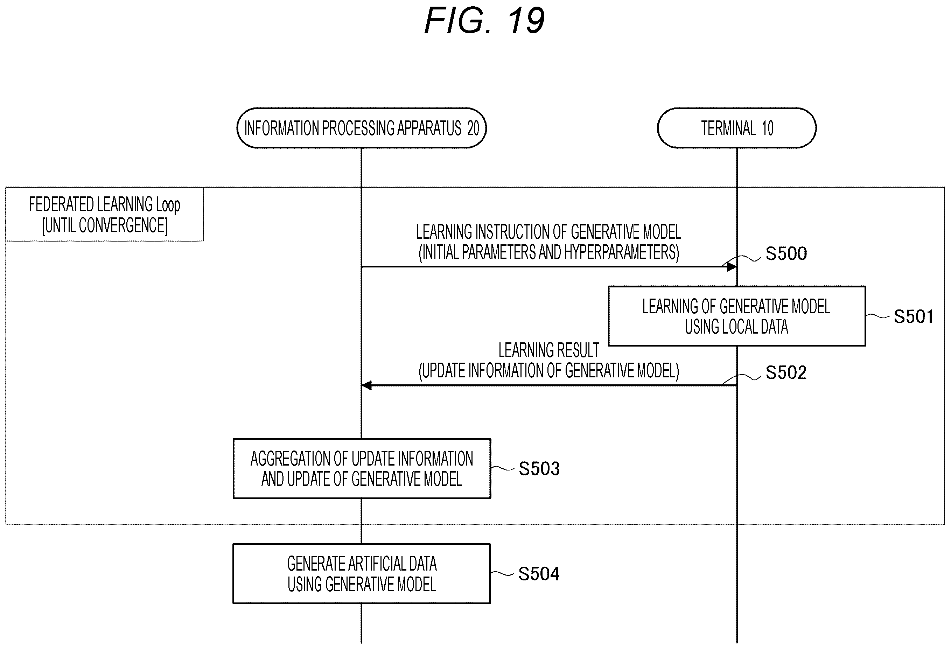

Next, an operation example in the modification of the information processing system according to the present embodiment described above will be described with reference to Figs. 18 and 19.

Fig. 18 is a sequence diagram for explaining the operation example in the modification of the information processing system according to the present embodiment. Since S103, S107, S109, S111, S113, and S115 illustrated in Fig. 18 are as described above with reference to Figs. 4, 9, and 12, redundant description will be omitted.

As illustrated in Fig. 18, first, the information processing apparatus 20 and the terminal 10 learn a generative model by federated learning (S151).

Next, the information processing apparatus 20 generates combined data on the basis of the above-described generative model (S155).

In the present modification, the learning unit 230 of the information processing apparatus 20 learns the inference model using the combined data generated on the basis of the generative model as learning data.

Fig. 19 is a sequence diagram illustrating a flow of processing of subroutines in S151 and S155 in the sequence diagram illustrated in Fig. 18.

### ((Subroutine S151))

As illustrated in Fig. 19, the learning unit 230 of the information processing apparatus 20 transmits a learning instruction including the setting values of the initial parameters and the hyperparameters of the generative model to each of the plurality of terminals 10. (S500).

Note that, as the initial parameters and the hyperparameters, randomly set values may be used at the first time of the federated learning Loop in S500 to S503.

Next, the learning unit 150 of each of the plurality of terminals 10 learns the generative model having received the learning instruction from the information processing apparatus 20 using the local data as learning data (S501).

Each of the learning units 150 causes the communication unit 170 to transmit update information of the generative model to the information processing apparatus 20 on the basis of the learning result (S502).

The information processing apparatus 20 aggregates the update information of the generative model received from each of the plurality of terminals 10, and updates the generative model on the basis of the aggregation result (S503).

The information processing apparatus 20 and the terminal 10 repeat the processing of S500 to S502 until the learning of the generative model converges.

### ((Subroutine S155))

Next, the generation unit 210 of the information processing apparatus 20 generates combined data using the learned generative model (S504).

The operation example in the modification of the information processing system according to the present embodiment has been described above with reference to Figs. 18 and 19.

### <6. Hardware Configuration>

The embodiments of the present disclosure have been described above. Next, a hardware configuration example common to the terminal 10 and the information processing apparatus 20 according to an embodiment of the present disclosure will be described.

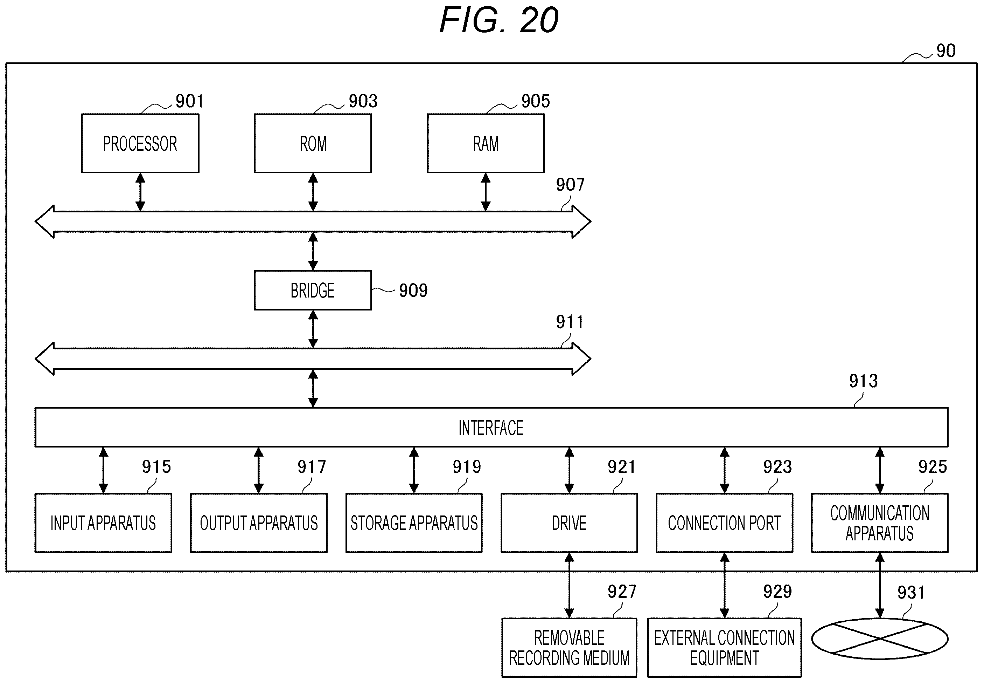

Fig. 20 is a block diagram illustrating a hardware configuration 90 according to an embodiment of the present disclosure.

The hardware configuration 90 can be applied to the terminal 10 and the information processing apparatus 20.

As illustrated in Fig. 20, the hardware configuration 90 includes, for example, a processor 901, a read only memory (ROM) 903, a random access memory (RAM) 905, a host bus 907, a bridge 909, an external bus 911, an interface 913, an input apparatus 915, an output apparatus 917, a storage apparatus 919, a drive 921, a connection port 923, and a communication apparatus 925. Note that the hardware configuration illustrated here is an example, and some of the components may be omitted. In addition, components other than the components illustrated here may be further included.

### (Processor 901)

The processor 901 functions as, for example, an arithmetic processing apparatus and a control apparatus, and controls the overall operation of each component or a part thereof on the basis of various programs recorded in the ROM 903, the RAM 905, the storage apparatus 919, or a removable recording medium 927.

### (ROM 903 and RAM 905)

The ROM 903 is a unit that stores a program read by the processor 901 and/or data used for calculation or the like. The RAM 905 temporarily or permanently stores, for example, a program read by the processor 901 and/or various parameters and the like that appropriately change when the program is executed.

### (Host Bus 907, Bridge 909, External Bus 911, and Interface 913)

The processor 901, the ROM 903, and the RAM 905 are mutually connected via, for example, the host bus 907 capable of high-speed data transmission. Meanwhile, the host bus 907 is connected to the external bus 911 having a relatively low data transmission speed via the bridge 909, for example. In addition, the external bus 911 is connected to various components via the interface 913.

### (Input Apparatus 915)

As the input apparatus 915, for example, a mouse, a keyboard, a touch panel, a button, a switch, a lever, and the like are used. Furthermore, as the input apparatus 915, a remote controller capable of transmitting a control signal using infrared rays or other radio waves may be used. Furthermore, the input apparatus 915 includes a voice input apparatus such as a microphone.

Furthermore, the input apparatus 915 may include an imaging apparatus and a sensor. The imaging apparatus is, for example, an apparatus that images a real space using various members such as an imaging element such as a charge coupled device (CCD) or a complementary metal oxide semiconductor (CMOS), and a lens for controlling image formation of a subject image on the imaging element, and generates a captured image. The imaging apparatus may capture a still image or may capture a moving image.

Examples of the sensor include various sensors such as a distance measuring sensor, an acceleration sensor, a gyro sensor, a geomagnetic sensor, a vibration sensor, an optical sensor, and a sound sensor. The sensor acquires information regarding the state of the hardware configuration 90 itself, such as the posture of the housing of the hardware configuration 90, or information regarding the surrounding environment of the hardware configuration 90, such as brightness or noise around the hardware configuration 90. Furthermore, the sensor may include a global positioning system (GPS) sensor that receives a GPS signal and measures the latitude, longitude, and altitude of the apparatus.

### (Output Apparatus 917)

The output apparatus 917 includes, for example, a display apparatus such as a cathode ray tube (CRT), a liquid crystal display (LCD), or an organic electro-luminescence (EL), or various vibration devices capable of visually or audibly notifying the user of acquired information, such as an audio output apparatus such as a speaker and a headphone, a printer, a mobile phone, or a facsimile.

### (Storage Apparatus 919)

The storage apparatus 919 is an apparatus for storing various data. As the storage apparatus 919, for example, a magnetic storage device such as a hard disk drive (HDD), a semiconductor storage device, an optical storage device, a magneto-optical storage device, or the like is used.

### (Drive 921)

The drive 921 is, for example, an apparatus that reads information recorded on the removable recording medium 927 such as a magnetic disk, an optical disk, a magneto-optical disk, or a semiconductor memory, or writes information to the removable recording medium 927.

### (Removable Recording Medium 927)

The removable recording medium 927 is, for example, a DVD medium, a Blu-ray (registered trademark) medium, an HD DVD medium, various semiconductor storage media, or the like. Of course, the removable recording medium 927 may be, for example, an IC card on which a non-contact IC chip is mounted, electronic equipment, or the like.

### (Connection Port 923)

The connection port 923 is, for example, a port for connecting external connection equipment 929 such as a universal serial bus (USB) port, an IEEE1394 port, a small computer system interface (SCSI) port, an RS-232C port, an optical audio terminal, or the like.

### (External Connection Equipment 929)

The external connection equipment 929 is, for example, a printer, a portable music player, a digital camera, a digital video camera, an IC recorder, or the like.

### (Communication Apparatus 925)

The communication apparatus 925 is a communication device for connecting to a network, and is, for example, a communication card for wired or wireless local area network (LAN), Bluetooth (registered trademark), or wireless USB (WUSB), a router for optical communication, a router for asymmetric digital subscriber line (ADSL), a modem for various types of communication, or the like.

### <7. Summary>

Although the preferred embodiments of the present disclosure have been described in detail with reference to the accompanying drawings, the technical scope of the present disclosure is not limited to such examples. It is obvious that a person having ordinary knowledge in the technical field of the present disclosure can conceive various changes or modifications within the scope of the technical idea described in the claims, and it is naturally understood that these also belong to the technical scope of the present disclosure.

For example, the steps in the processing of the operations of the terminal 10 and the information processing apparatus 20 according to the present embodiment do not necessarily need to be processed in time series in the order described as the explanatory diagrams. For example, the steps in the processing of the operations of the terminal 10 and the information processing apparatus 20 may be processed in an order different from the order described as the explanatory diagrams, or may be processed in parallel.

Furthermore, it is also possible to create one or more computer programs for causing hardware such as a processor, a ROM, and a RAM built in the terminal 10 and the information processing apparatus 20 described above to exhibit the functions of the information processing system according to the present embodiment. Furthermore, a computer-readable storage medium storing the one or more computer programs is also provided.

Furthermore, the effects described in the present specification are merely illustrative or exemplary, and are not restrictive. That is, the technology according to the present disclosure can exhibit other effects obvious to those skilled in the art from the description of the present specification together with or instead of the above effects.

Note that the following configurations also belong to the technical scope of the present disclosure.
(1) An information processing apparatus including:
   a learning unit that learns an inference model by federated learning; and
   an acquisition unit that acquires, from a plurality of terminals, privacy-protected data that is data obtained by executing privacy protection processing on local data obtained by each of the plurality of terminals,
   in which the learning unit is configured to:
      perform learning of the inference model on the basis of the privacy-protected data; and
      distribute information regarding the inference model including a hyperparameter of the inference model set on the basis of a result of the learning to the plurality of terminals,
   the acquisition unit is configured to
      acquire, from the plurality of terminals, update information of the inference model obtained by performing the learning of the inference model using the hyperparameter distributed by each of the plurality of terminals using the local data as learning data, and
   the learning unit is configured to
      update the inference model using the update information.
(2) The information processing apparatus according to (1),
   in which the learning unit learns the inference model using the privacy-protected data as the learning data.
(3) The information processing apparatus according to (1), further including
   a generation unit that generates combined data on the basis of the privacy-protected data,
   in which the learning unit learns the inference model using the combined data as learning data.
(4) The information processing apparatus according to (2) or (3),
   in which the privacy-protected data is data generated by performing data conversion processing satisfying differential privacy on the local data.
(5) The information processing apparatus according to (4),
   in which the data conversion processing is processing of assigning a random number having a predetermined strength to each element included in the local data.
(6) The information processing apparatus according to (5), in which the data conversion processing is performed using a Laplace mechanism or a Gaussian mechanism.
(7) The information processing apparatus according to (2),
   in which the privacy-protected data is generated by performing data conversion processing of reducing a dimension of the local data on the local data.
(8) The information processing apparatus according to (3),
   in which the privacy-protected data is statistical data generated by performing data conversion processing satisfying differential privacy on the statistical data of the local data, and
   the generation unit is configured to: estimate a distribution of the local data on the basis of the privacy-protected data; and
   generate the combined data on the basis of the distribution estimated.
(9) The information processing apparatus according to (3),
   in which the privacy-protected data is statistical data generated by performing an encryption processing satisfying a requirement in secret calculation on the statistical data of the local data, and
   the generation unit is configured to: perform aggregation processing of the privacy-protected data in a state where the privacy-protected data is encrypted;
   estimate a distribution of the local data on the basis of a result of the aggregation processing; and
   generate the combined data on the basis of the distribution estimated.
(10) The information processing apparatus according to (3),
   in which the generation unit is configured to: perform aggregation processing of the privacy-protected data; and
   distribute tendency information indicating a statistical data tendency of the local data to each of the plurality of terminals on the basis of a result of the aggregation processing, and
   the acquisition unit acquires, from each of the plurality of terminals, the privacy-protected data generated by correcting or excluding local data regarded as an abnormal value on the basis of the tendency information by each of the plurality of terminals.
(11) The information processing apparatus according to (10),
   in which the privacy-protected data includes a feature amount of an element included in the local data and label information associated with each feature amount, and
   the generation unit distributes a distribution of the feature amount for each piece of the label information as the tendency information.
(12) The information processing apparatus according to (3),
   in which the generation unit monitors a change in a distribution tendency of the local data on the basis of an aggregation processing result of the privacy-protected data, and
   the learning unit performs relearning of the inference model using federated learning when the generation unit detects that the distribution tendency has changed.
(13) The information processing apparatus according to (3),
   in which the generation unit generates the combined data on the basis of a generative model generated on the basis of distribution information of the local data estimated from the privacy-protected data or the local data.
(14) The information processing apparatus according to any one of (1) to (14),
   in which the acquisition unit acquires, from the plurality of terminals, difference information indicating a difference between parameters of the inference model before and after update as update information of the inference model, and
   the learning unit updates the inference model on the basis of the difference information.
(15) An information processing method executed by a computer, the computer including a processor configured to:
   learn an inference model by federated learning;
   acquire, from a plurality of terminals, privacy-protected data that is data obtained by executing privacy protection processing on local data obtained by each of the plurality of terminals;
   perform learning of the inference model on the basis of the privacy-protected data;
   distribute information regarding the inference model including a hyperparameter of the inference model set on the basis of a result of the learning to the plurality of terminals;
   acquire, from the plurality of terminals, update information of the inference model obtained by performing the learning of the inference model using the hyperparameter distributed by each of the plurality of terminals using the local data as learning data; and
   update the inference model using the update information.
(16) A program for causing a computer to function as an information processing apparatus including:
   a learning unit that learns an inference model by federated learning; and
   an acquisition unit that acquires, from a plurality of terminals, privacy-protected data that is data obtained by executing privacy protection processing on local data obtained by each of the plurality of terminals,
   in which the learning unit is configured to:
      perform learning of the inference model on the basis of the privacy-protected data; and
      distribute information regarding the inference model including a hyperparameter of the inference model set on the basis of a result of the learning to the plurality of terminals,
   the acquisition unit is configured to
      acquire, from the plurality of terminals, update information of the inference model obtained by performing the learning of the inference model using the hyperparameter distributed by each of the plurality of terminals using the local data as learning data, and
   the learning unit is configured to
      update the inference model using the update information.

### REFERENCE SIGNS LIST

- 10: Terminal
- 110: Acquisition unit
- 130: Data processing unit
- 150: Learning unit
- 170: Communication unit
- 20: Information processing apparatus
- 210: Generation unit
- 230: Learning unit
- 250: Communication unit
- 30: Network

## Claims

1. An information processing apparatus comprising:
a learning unit that learns an inference model by federated learning; and
an acquisition unit that acquires, from a plurality of terminals, privacy-protected data that is data obtained by executing privacy protection processing on local data obtained by each of the plurality of terminals,
wherein the learning unit is configured to:
perform learning of the inference model on a basis of the privacy-protected data; and
distribute information regarding the inference model including a hyperparameter of the inference model set on a basis of a result of the learning to the plurality of terminals,
the acquisition unit is configured to
acquire, from the plurality of terminals, update information of the inference model obtained by performing the learning of the inference model using the hyperparameter distributed by each of the plurality of terminals using the local data as learning data, and
the learning unit is configured to
update the inference model using the update information.

2. The information processing apparatus according to claim 1,
wherein the learning unit learns the inference model using the privacy-protected data as the learning data.

3. The information processing apparatus according to claim 1, further comprising
a generation unit that generates combined data on a basis of the privacy-protected data,
wherein the learning unit learns the inference model using the combined data as learning data.

4. The information processing apparatus according to claim 2,
wherein the privacy-protected data is data generated by performing data conversion processing satisfying differential privacy on the local data.

5. The information processing apparatus according to claim 4,
wherein the data conversion processing is processing of assigning a random number having a predetermined strength to each element included in the local data.

6. The information processing apparatus according to claim 5,
wherein the data conversion processing is performed using a Laplace mechanism or a Gaussian mechanism.

7. The information processing apparatus according to claim 2,
wherein the privacy-protected data is generated by performing data conversion processing of reducing a dimension of the local data on the local data.

8. The information processing apparatus according to claim 3,
wherein the privacy-protected data is statistical data generated by performing data conversion processing satisfying differential privacy on the statistical data of the local data, and
the generation unit is configured to: estimate a distribution of the local data on a basis of the privacy-protected data; and
generate the combined data on a basis of the distribution estimated.

9. The information processing apparatus according to claim 3,
wherein the privacy-protected data is statistical data generated by performing an encryption processing satisfying a requirement in secret calculation on the statistical data of the local data, and
the generation unit is configured to: perform aggregation processing of the privacy-protected data in a state where the privacy-protected data is encrypted;
estimate a distribution of the local data on a basis of a result of the aggregation processing; and
generate the combined data on a basis of the distribution estimated.

10. The information processing apparatus according to claim 3,
wherein the generation unit is configured to: perform aggregation processing of the privacy-protected data; and
distribute tendency information indicating a statistical data tendency of the local data to each of the plurality of terminals on a basis of a result of the aggregation processing, and
the acquisition unit acquires, from each of the plurality of terminals, the privacy-protected data generated by correcting or excluding local data regarded as an abnormal value on a basis of the tendency information by each of the plurality of terminals.

11. The information processing apparatus according to claim 10,
wherein the privacy-protected data includes a feature amount of an element included in the local data and label information associated with each feature amount, and
the generation unit distributes a distribution of the feature amount for each piece of the label information as the tendency information.

12. The information processing apparatus according to claim 3,
wherein the generation unit monitors a change in a distribution tendency of the local data on a basis of an aggregation processing result of the privacy-protected data, and
the learning unit performs relearning of the inference model using federated learning when the generation unit detects that the distribution tendency has changed.

13. The information processing apparatus according to claim 3,
wherein the generation unit generates the combined data on a basis of a generative model generated on a basis of distribution information of the local data estimated from the privacy-protected data or the local data.

14. The information processing apparatus according to claim 1,
wherein the acquisition unit acquires, from the plurality of terminals, difference information indicating a difference between parameters of the inference model before and after update as update information of the inference model, and
the learning unit updates the inference model on a basis of the difference information.

15. An information processing method executed by a computer, the computer including a processor configured to:
learn an inference model by federated learning;
acquire, from a plurality of terminals, privacy-protected data that is data obtained by executing privacy protection processing on local data obtained by each of the plurality of terminals;
perform learning of the inference model on a basis of the privacy-protected data;
distribute information regarding the inference model including a hyperparameter of the inference model set on a basis of a result of the learning to the plurality of terminals;
acquire, from the plurality of terminals, update information of the inference model obtained by performing the learning of the inference model using the hyperparameter distributed by each of the plurality of terminals using the local data as learning data; and
update the inference model using the update information.

16. A program for causing a computer to function as an information processing apparatus including:
a learning unit that learns an inference model by federated learning; and
an acquisition unit that acquires, from a plurality of terminals, privacy-protected data that is data obtained by executing privacy protection processing on local data obtained by each of the plurality of terminals,
wherein the learning unit is configured to:
perform learning of the inference model on a basis of the privacy-protected data; and
distribute information regarding the inference model including a hyperparameter of the inference model set on a basis of a result of the learning to the plurality of terminals,
the acquisition unit is configured to
acquire, from the plurality of terminals, update information of the inference model obtained by performing the learning of the inference model using the hyperparameter distributed by each of the plurality of terminals using the local data as learning data, and
the learning unit is configured to
update the inference model using the update information.
